# FASCICULE DE BREVET EUROPEEN

(11) **EP 2 500 137 B1**
(45) Date de publication et mention de la délivrance du brevet: **24.02.2016**
(21) Numéro de dépôt: 12290093.9
(22) Date de dépôt: 16.03.2012
(51) Int. Cl.: B25B 5/08, B25B 31/00, F16B 2/16, F16B 19/10, F16B 21/16, F16B 5/06, F16B 2/12

(54) **Broche à serrage rapide**
Schnellverschlussspindel
Rapid clamping pin

(30) Priorité: 18.03.2011 FR 1100811
(43) Date de publication de la demande: 19.09.2012
(73) Titulaire: Norelem, 10280 Fontaine Les Gres (FR)
(72) Inventeur: Cardon-Dubois, Damien, 10150 Lavau (FR)
(74) Mandataire: Hammond, William

(56) Documents cités:
- DE-A1- 19 941 424
- FR-A1- 2 795 462
- GB-A- 938 150
- GB-A- 2 279 693
- GB-A- 2 300 581
- US-A- 2 816 471
- BRAUER LTD: "Clamping products", Catalogue, pages 122 et 123 , 3 novembre 2009 (2009-11-03), XP002663197, Extrait de l'Internet: URL:http://www.synair.ch/jmuffin/upload/XP ORT Cat complete 0803_Clamp Catalogue.pdf [extrait le 2011-11-09]

## Description

L'invention est relative à une broche à serrage rapide, spécialement adaptée à l'assemblage par serrage de pièces mécaniques sensiblement planes.

L'assemblage de pièces mécaniques au moyen de broches, telles que des broches à billes de serrage par exemple, est connu, notamment dans le domaine de la construction de machines outils. Ce type de broche comprend, habituellement, un corps de broche muni de plusieurs billes de serrage extractibles radialement venant engager un épaulement, suite à l'extraction radiale partielle des billes de serrage, sur commande par l'intermédiaire d'une tige de commande de l'extraction et/ou du retrait radial des billes de serrage, en vue de l'engagement respectivement de la libération des billes de serrage de cet épaulement.

De manière pratique, la tige de commande est constituée par une vis latérale, oblique vis-à-vis de l'axe longitudinal de la broche, cette vis devant être actionnée manuellement, le cas échéant au moyen d'un outil, pour assurer le montage respectivement le démontage de la broche porteuse d'un outil de coupe ou d'usinage de la platine porte outils équipant la machine outil. Les billes de serrage sont actionnées radialement par l'intermédiaire d'une bille de transmission d'effort.

Pour une description plus détaillée d'une telle broche à billes de serrage, on pourra utilement se reporter au brevet US 3,498,653 délivré le 3 mars 1970.

Un tel type de broche donne satisfaction, dans la mesure où les billes extractibles radialement permettent d'assurer une fixation satisfaisante des broches porte- outils sur les platines des machines outils.

Toutefois, l'installation de ces broches sur des platines porte outils multiples s'avère consommatrice de temps, dans la mesure où le vissage-dévissage de la vis apparaît peu rapide et s'ajoute à l'opération de positionnement de la broche, notamment lors de la nécessité de procéder à un changement d'outil en cours de processus de fabrication.

Plus récemment, un perfectionnement consistant à rationaliser les étapes de montage/démontage des broches de ce type a été proposé par le brevet US 4,135,418 délivré le 23 janvier 1979.

Dans ce but, la structure générale de la broche à billes de serrage a été modifiée de façon à exercer un effort d'actionnement de la bille de transmission d'effort, selon l'axe longitudinal de la broche, ceci afin de faciliter le montage/démontage et la mise en opération de cette dernière, par simple insertion longitudinale dans un logement. L'effort précité est exercé par une tige repoussée par des rondelles Belleville, lors de l'engagement d'une tête de broche portant la bille de transmission d'effort et les billes de serrage, ainsi que l'outil à monter, dans ce logement. La commande de la libération des billes de serrage doit toutefois être effectuée par l'intermédiaire d'un circuit hydraulique, libérant la contrainte exercée par les rondelles Belleville et finalement les billes de serrage et l'outil.

Ce dispositif donne satisfaction, mais reste d'une utilisation limitée au montage d'outils de coupe ou d'usinage sur les platines de machines-outils, pour lesquels la liaison par serrage doit être effective ou relâchée. Une autre broche à serrage rapide selon la preambule de la revendication 1 est connue du document US 2 816 471.

La présente invention a pour objet la mise en oeuvre d'une broche à serrage rapide progressif, plus particulièrement destinée à l'assemblage, notamment manuel, de pièces mécaniques sensiblement planes. La notion de pièces sensiblement planes recouvre toute pièce mécanique de forme quelconque comportant au moins deux méplats en vis à vis et dans lesquels un orifice de fixation traversant ces derniers peut, si nécessaire, être ménagé.

En particulier, un objet de la présente invention est la mise en oeuvre d'une broche à serrage rapide progressif, grâce à laquelle, en raison de l'application successive d'un blocage puis d'un serrage progressif, l'effort de serrage appliqué sur au moins l'une des pièces planes peut être gradué.

Un autre objet de la présente invention est en outre la mise en oeuvre d'une broche à serrage rapide progressif, grâce à laquelle le serrage des pièces peut être appliqué soit entre un organe de serrage et un support des pièces planes à serrer, soit entre cet organe de serrage, constitué par des billes extractibles, et un épaulement de la broche à serrage rapide.

Un autre objet de la présente invention est également la mise en oeuvre d'une broche à serrage rapide progressif à action manuelle, grâce à laquelle l'épaisseur de serrage des pièces mécaniques planes à assembler peut être ajustée.

La broche à serrage rapide, objet de la présente invention, comporte un corps de broche cylindrique muni d'au moins un organe de serrage à une de ses extrémités, une tige de commande de l'application et/ou du retrait de l'organe de serrage, contenue dans le corps de broche, et un organe de manoeuvre et de commande de cet organe de serrage placé à l'autre de ses extrémités sur un support de serrage d'une ou plusieurs pièces à serrer.

Elle est remarquable en ce que, les pièces à assembler étant placées entre le support de serrage et l'organe de serrage, ladite broche comporte au moins un organe de commande simultanée de l'application et/ou du retrait de l'organe de serrage et du serrage/desserrage progressif des pièces planes entre l'organe de serrage en position d'application/retrait et ledit support de serrage, et l'organe de commande simultanée comportant au moins :
- un bouton de manoeuvre par commande tourner-pousser placé sur une tige de poussée de l'organe de serrage, l'ensemble bouton de manoeuvre-tige de poussée étant placé sur l'autre des extrémités du corps de broche et monté sur ce dernier par l'intermédiaire d'un ressort de rappel ;
- un axe transversal, sensiblement orthogonal à l'axe longitudinal de symétrie de la tige de poussée et engagé à glissement dans une lumière ménagée sur la paroi du corps de broche, l'ensemble axe transversal-lumière formant une came à transmission axiale du déplacement en translation de la tige de poussée selon l'axe de rotation de celle-ci, pour engendrer l'application/retrait de l'organe de serrage, cette lumière ménagée sur la paroi du corps de broche étant formée par deux lumières élémentaires symétriques par rapport à l'axe longitudinal de symétrie de la tige de poussée, chaque extrémité de l'axe transversal étant engagée à glissement dans l'une des lumières élémentaires, chaque lumière élémentaire formant une rampe de serrage.

La broche à serrage rapide, objet de l'invention, est aussi remarquable en ce que les extrémités de l'axe transversal sont engagées à glissement dans la lumière par l'intermédiaire d'un galet.

La broche à serrage rapide, objet de l'invention, est en outre remarquable en ce que chaque rampe de serrage élémentaire comprend une rampe d'approche, dont l'axe de symétrie est sensiblement parallèle à l'axe longitudinal de symétrie de la tige de poussée, et , une rampe de serrage progressif, dont la ligne médiane est inclinée par rapport à l'axe longitudinal de symétrie de la tige de poussée.

La broche à serrage rapide selon l'invention est en outre remarquable en ce que l'organe de serrage est constitué par une vis à patin montée dans un alésage ménagé selon l'axe longitudinal de symétrie de la tige de commande.

La broche à serrage rapide objet de l'invention est également remarquable en ce que, les pièces à assembler étant munies chacune d'un orifice de serrage dans lequel le corps de broche est engagé, l'organe de serrage est constitué par un corps de broche cylindrique muni d'au moins une bille de serrage à une de ses extrémités, et en ce que la tige de commande de l'application et/ou du retrait de l'organe de serrage est constituée par une tige de commande de l'extraction et/ou du retrait radial de chaque bille de serrage. L'organe de commande simultanée de l'application et/ou du retrait de l'organe de serrage forme ainsi un organe de commande simultanée de l'extraction et/ou du retrait des billes de serrage et du serrage/desserrage progressif des pièces planes entre les billes de serrage en position d'extraction/retrait et un épaulement de serrage.

La broche à serrage rapide, objet de l'invention, est également remarquable en ce que la liaison mécanique entre l'extrémité de la tige de poussée exerçant l'extraction/ retrait des billes de serrage comprend au moins une bille de transmission d'effort contenue dans un logement ménagé à l'extrémité du corps de broche comportant les billes de serrage, ladite bille de transmission d'effort étant en contact mécanique, d'une part, avec l'extrémité de la tige de commande, et, d'autre part, avec les billes de serrage engagées chacune dans un orifice d'extraction/retrait ménagé sur la paroi latérale d'extrémité du corps de broche.

La broche à serrage rapide selon l'invention est en outre remarquable en ce que le corps de broche comprend, au voisinage de l'épaulement de serrage, un filetage spécifique ménagé sur la surface latérale du corps de broche, et, un écrou engagé sur le filetage spécifique formant un épaulement de serrage réglable en distance vis-à-vis de l'extrémité du corps de broche comportant les billes de serrage.

La broche à serrage rapide, objet de l'invention, est enfin remarquable en ce que le corps de broche est formé d'une partie femelle et d'une partie mâle, complémentaires, la partie mâle amovible pouvant être substituée pour former soit une broche à vis à patin, soit une broche à billes.

La broche à serrage rapide, objet de l'invention, trouve application à l'assemblage provisoire ou permanent de pièces mécaniques planes ou sensiblement planes les plus diverses, en particulier de pièces mécaniques pouvant présenter des valeurs de résistance à la compression sensiblement différentes.

Elle sera mieux comprise à la lecture de la description et à l'observation des dessins ci-après, dans lesquels :
- la figure 1 représente, à titre illustratif, une vue en perspective d'un premier mode de mise en oeuvre de la broche à serrage rapide objet de l'invention ;
- la figure 2a représente une vue de gauche en coupe, selon un plan P longitudinal de symétrie, orthogonal à la feuille des dessins, incluant l'axe XX longitudinal de symétrie de la broche ;
- la figure 2b représente une vue en perspective de la broche à serrage rapide représentée en figure 1, placée dans un support de serrage ;
- la figure 2c représente une vue en coupe, selon un plan P longitudinal de symétrie de la broche et du support de serrage, de la broche et du support de serrage représentés en figure 2b ;
- la figure 3 représente, à titre illustratif, une vue en perspective d'un deuxième mode de mise en oeuvre d'une broche à serrage rapide conforme à l'objet de la présente invention, dans laquelle l'organe de serrage est formé par des billes de serrage ;
- la figure 4a représente une vue de face de la broche à billes à serrage rapide représentée en figure 3 ;
- la figure 4b représente une vue en coupe, selon le plan P longitudinal de symétrie de la broche à serrage rapide représentée en figure 3, soit selon le plan orthogonal à la feuille des dessins incluant l'axe longitudinal de symétrie XX de la broche à billes à serrage rapide représentée en figure 4a ;
- la figure 5a représente, à titre illustratif, une variante de mise en oeuvre de la broche serrage rapide objet de l'invention, dans laquelle la hauteur de serrage peut être ajustée ;
- la figure 5b représente, à titre illustratif, une vue en coupe selon un plan P longitudinal de symétrie orthogonal à la feuille des dessins et incluant l'axe longitudinal de symétrie XX de la broche, selon le mode de mise en oeuvre de la figure 5a ;
- la figure 6 représente l'exécution du processus d'assemblage de deux pièces sensiblement planes, grâce à la mise en oeuvre de la broche à serrage rapide, objet de l'invention, dans son deuxième mode de mise en oeuvre.

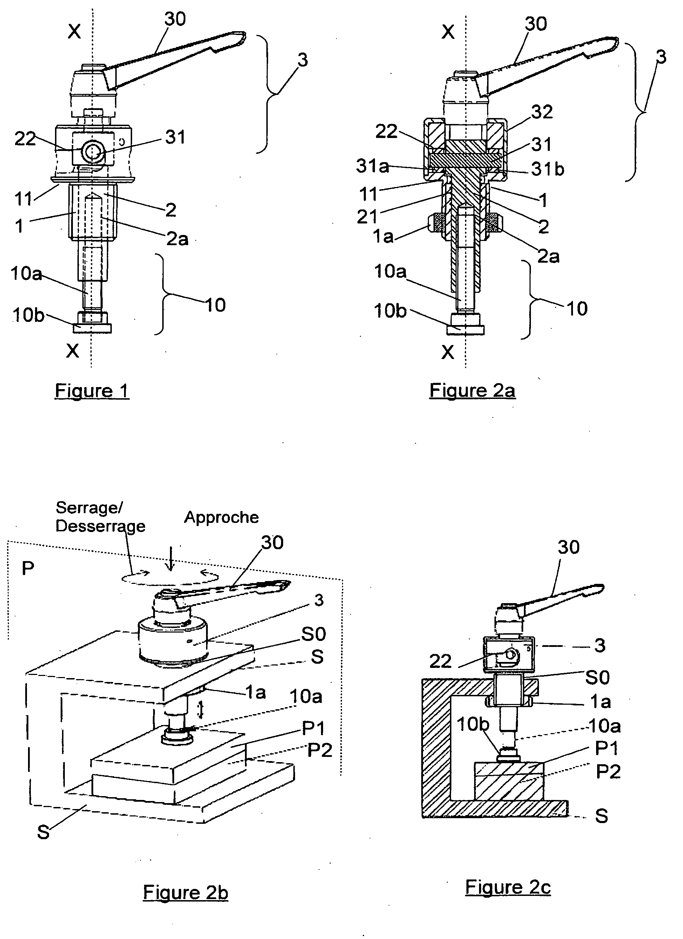

En référence à la figure 1, la broche à serrage rapide, objet de l'invention, comprend un corps de broche cylindrique 1 muni d'au moins d'un organe de serrage 10 à une de ses extrémités.

La broche à serrage rapide selon l'invention comporte en outre une tige de commande et de poussée 2 permettant la commande de l'application et/ou du retrait de l'organe de serrage 10 , la tige de commande et de poussée 2 étant sensiblement contenue dans le corps de broche 1. Elle comporte en outre un organe 3 de manoeuvre et de commande de l'organe de serrage 10. L'organe 3 de manoeuvre et de commande est placé à l'autre des extrémités du corps de broche cylindrique 1, sur un épaulement de fixation 11 sur un support S d'une ou plusieurs pièces à serrer.

Selon un aspect remarquable de la broche à serrage rapide objet de l'invention, les pièces à assembler étant placées entre l'organe de serrage 10 et le support S, l'organe 3 de manoeuvre et de commande de l'application/retrait de l'organe de serrage 10 forme un organe de commande simultanée de l'extraction et/ou du retrait de ce dernier et du serrage/desserrage progressif des pièces planes, entre l'organe de serrage 10 et le support de serrage S.

Une description plus détaillée de l'organe de commande simultanée 3 sera maintenant donnée en liaison avec les figures 2a, 2b et 2c.

A l'observation des figures précitées, on constate que l'organe de manoeuvre et de commande 3 peut comporter de préférence un organe, levier ou bouton de manoeuvre 30, par commande tourner-pousser, placé sur la tige de commande et de poussée 2 de l'organe de serrage 10. L'ensemble organe ou bouton de manoeuvre 30-tige de poussée 2 est placé sur l'autre des extrémités du corps de broche 1 et monté sur ce dernier par l'intermédiaire d'un ressort de rappel 21.

En outre, l'organe de commande simultanée 3 comprend un axe transversal 31 sensiblement orthogonal à l'axe longitudinal de symétrie XX de la tige de poussée 2, cet axe transversal, ainsi que représentée sur les figures 2a, 2b et 2c, étant engagé à glissement dans une lumière 22 ménagée sur la paroi du corps de broche 1. La partie formée par la partie supérieure de la tige de commande 2 et par l'axe transversal 31 est recouverte par un capot 32, lequel est représenté en transparence sur la figure 1, afin de permettre l'observation de l'ensemble des organes recouverts par ce dernier sur la figure précitée, en particulier l'agencement relatif de l'axe transversal 31 et de l'engagement de ce dernier dans la lumière 22.

A l'observation des figures 2a, 2b et 2c, on comprend que l'ensemble axe transversal 31-lumière 22 forme une came à transmission axiale du déplacement en translation de la tige de commande et de poussée 2, selon l'axe de rotation XX de celle-ci, par commande tourner-pousser du bouton 30, afin d'engendrer l'application/retrait de l'organe de serrage 10.

De préférence, et afin d'assurer une bonne cinématique de l'ensemble, les extrémités de l'axe transversal 31 sont engagées à glissement dans la lumière 22 par l'intermédiaire d'un galet 31 a, 31 b.

Selon un premier mode de mise en oeuvre non limitatif de la bride de serrage rapide objet de l'invention, tel que représenté en figure 1 et 2a à 2c, l'organe de serrage 10 est constitué par une vis 10a à patin 10b. La vis 10a est montée dans un alésage 2a ménagé selon l'axe longitudinal de symétrie XX de la tige de commande 2. Le patin 10b est destiné à exercer l'effort de serrage sur la ou les pièces à serrer P1,P2.

Ainsi qu'on pourra l'observer sur les figures 2b et 2c, la broche de serrage rapide objet de l'invention peut être montée dans un orifice de montage S0 ménagé dans le support S et fixé à ce dernier par l'intermédiaire d'un écrou 1 a.

Lors de la manoeuvre de l'organe ou bouton de manoeuvre 30, la ou les pièces à serrer, P1,P2, représentées en figures 2b et 2c sont soumises à l'effort de serrage entre le patin 10b et la face supérieure de la base du support S.

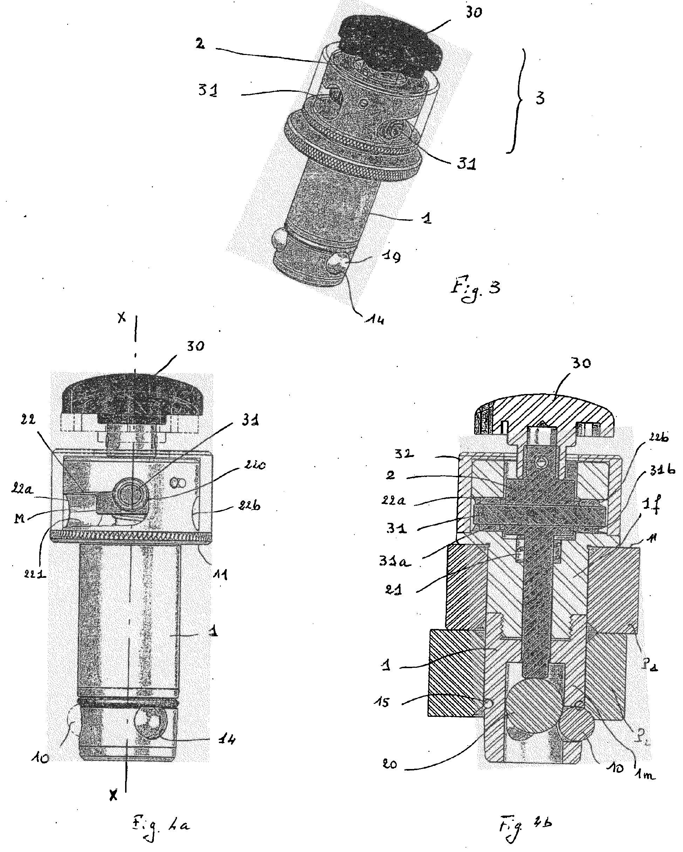

Un deuxième mode de mise en oeuvre de la broche à serrage rapide objet de l'invention, est maintenant décrit en liaison avec les figures 3 et 4a, 4b.

Le deuxième mode de mise en oeuvre précité est plus particulièrement destiné à l'assemblage de pièces planes munies chacune d'un orifice de serrage dans lequel le corps de broche 1 est engagé.

Dans ce mode de mise en oeuvre, le corps de broche 1, cylindrique, comporte à une de ses extrémités au moins une bille de serrage constituant l'organe de serrage 10. On comprend par exemple qu'afin d'assurer un bon maintien de l'assemblage des pièces, la broche, objet de l'invention, est, de préférence, équipée d'une pluralité de billes, trois billes réparties à 120° dans un plan orthogonal à l'extrémité porteuse des billes de serrage.

De même, la tige de commande 2 de l'application et/ou du retrait de l'organe de serrage est constitué par une tige de commande de l'extraction et/ou du retrait radial de chaque bille de serrage 10. Ainsi, l'organe de commande simultanée 3 de l'application et/ou du retrait de l'organe de serrage forme un organe de commande simultanée de l'extraction et/ou du retrait des billes de serrage 10 et du serrage/desserrage progressif des pièces planes P1,P2 entre les billes de serrage 10, en position d'extraction/retrait, et l'épaulement 11, constituant un épaulement de serrage.

On comprend en particulier que l'extraction des billes de serrage 10 est partielle et exécutée au travers de l'orifice d'extraction 14 de chacune de celles-ci, afin de permettre le maintien en position fixe de chaque bille de serrage extraite, par l'intermédiaire d'un joint de maintien 15.

Un mode de réalisation préférentiel de la lumière 22 est maintenant décrit en référence aux figures 4a et 4b précitées. Ce mode de réalisation peut avantageusement être utilisé tant pour l'exécution du premier que du deuxième mode de mise en oeuvre de la broche à serrage rapide objet de l'invention.

Selon ce mode de réalisation, la lumière 22 ménagée sur la paroi du corps de broche 1 est formée avantageusement par deux lumières élémentaires 22a et 22b symétrique par rapport à l'axe longitudinal de symétrie XX de la tige de commande et de poussée 2. En particulier, chaque extrémité de l'axe transversal 31 est ainsi engagée à glissement dans l'une des lumières élémentaires, chaque lumière élémentaire 22a, 22b formant avantageusement une rampe de serrage.

A l'observation de la figure 4a, on comprend que chaque rampe de serrage élémentaire comprend une rampe d'approche 220, dont l'axe de symétrie est sensiblement parallèle à l'axe de symétrie XX de la tige de commande et de poussée 2, afin de permettre le déplacement vertical de l'ensemble constitué par le bouton de commande 30 et la tige de poussée 2 dans un sens vertical, et, ainsi, commander l'extraction partielle radiale des billes à travers leur orifice 14. Chaque rampe de serrage élémentaire comprend en outre une rampe de serrage progressif 221 dont la ligne médiane M est inclinée par rapport à l'axe de symétrie XX de la tige de poussée et donc finalement par rapport à un plan orthogonal à l'axe de symétrie XX précité, pour former la rampe de serrage considérée.

De manière classique, la liaison mécanique entre l'extrémité de la tige de poussée 2 exerçant l'extraction/ retrait des billes de serrage comprend par exemple une bille de transmission d'effort 20, contenue dans un logement aménagé à l'extrémité du corps de broche1 comportant également les billes de serrage 10. La bille de transmission d'effort 20 est en contact mécanique, d'une part, avec l'extrémité de la tige de commande 2, et d'autre part, avec les billes de serrage 10 engagées chacune dans l'orifice d'extraction retrait 14 correspondant, ménagé sur la paroi latérale d'extrémité du corps de broche 1.

Grâce à la mise en oeuvre de la rampe de serrage, on comprend que le serrage est progressif par exécution du blocage des pièces à assembler, notées P1 et P2, puis par application du fait de la rotation du bouton 30 autour de l'axe de rotation XX et engagement à force de l'extrémité de l'axe transversal 31 dans la lumière 22 correspondante, d'une force d'assemblage sensiblement croissante, en raison de la rampe de serrage, par l'intermédiaire de l'épaulement de serrage 11.

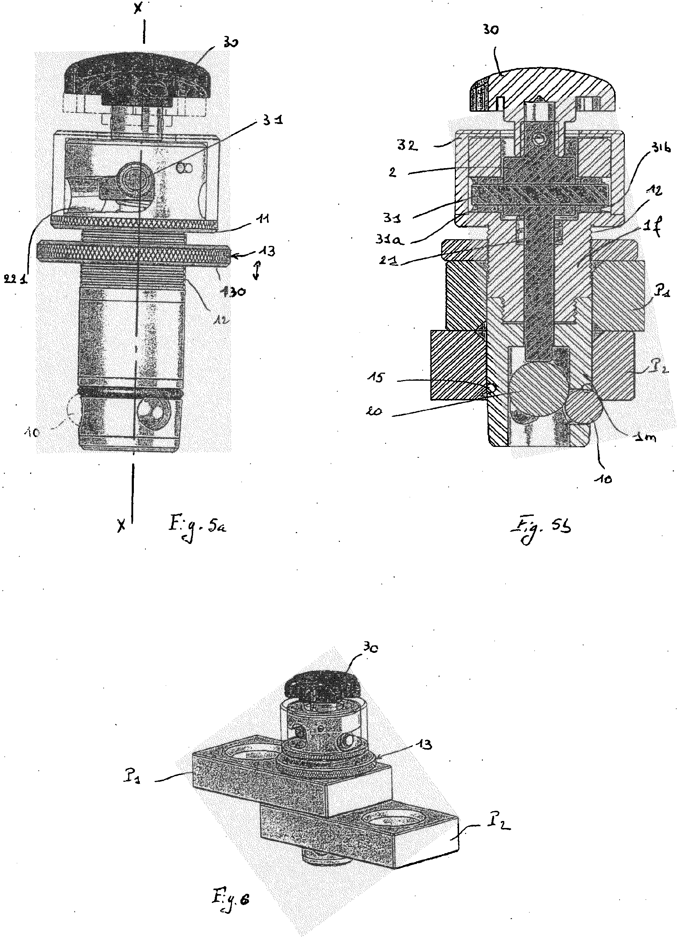

Une variante non limitative du deuxième mode de mise en oeuvre de la broche à serrage rapide objet de l'invention, telle qu'illustrée aux figures 3 et 4a, 4b est maintenant donnée en liaison avec les figures 5a et 5b.

Dans le mode de mise en oeuvre précité, le corps de broche 1 est muni, au voisinage de l'épaulement de serrage 11, d'un filetage spécifique 12 ménagé sur la surface latérale du corps de broche 1. En outre un écrou 13 formant molette de réglage est engagé sur le filetage spécifique 12, de façon à former un épaulement de serrage réglable en distance 130, vis-à-vis de l'extrémité du corps de broche 1 comportant les billes de serrage 10. La molette de réglage 13 peut être constituée comme une molette micrométrique.

En référence à la figure 5a, on comprend que le vissage et/ou le dévissage de l'écrou 13 formant molette de réglage permet de déplacer ce dernier selon le sens de la double flèche représentée au dessin, pour régler la distance de serrage, en fonction de l'épaisseur totale des pièces à assembler. Il est ainsi possible, grâce à la mise en oeuvre de la broche à billes à serrage rapide, objet de l'invention, d'assurer l'assemblage de pièces d'épaisseur différente avec la même broche et en particulier de prendre en compte des pièces dont la résistance à l'effort de compression est différente, par application d'une force de serrage, après blocage, graduée par la position en rotation des extrémités 31 a et 31b de l'axe transversal 31 sur chaque rampe de serrage progressif 221.

Une représentation d'un processus d'assemblage de pièces planes P1 et P2 au moyen d'une broche à serrage rapide, constituant une broche à billes, selon le deuxième mode de mise en oeuvre conforme à l'objet de l'invention, est donnée en figure 6.

On procède à l'alignement des orifices d'assemblage des pièces P1 et P2 puis à l'introduction du corps de broche 1 au travers des orifices d'assemblage alignés, de façon à traverser totalement l'empilement des pièces précitées. La manoeuvre du bouton de commande 30 par commande tourner-pousser, désignée approche-serrage sur la figure 6, permet d'assurer le blocage des pièces par extraction radiale partielle des billes de serrage 10 puis par application de la force de serrage adaptée par l'intermédiaire des rampes de serrage et de l'axe transversal 31, ainsi que décrit précédemment. Le désassemblage des pièces, lorsque l'assemblage ne doit pas être permanent, peut être effectué par les opérations inverses.

Enfin, en référence aux figures 2a et 4b ou 5b par exemple, le corps de broche 1 peut être avantageusement formé, dans sa partie voisine de l'organe de serrage 10, par deux parties complémentaires, femelle, 1f, respectivement mâle, 1m, assemblées par vissage. La partie mâle 1 m est ainsi amovible. Il est alors possible de configurer la broche à serrage rapide objet de l'invention selon le premier, vis à patin, respectivement le deuxième , broche à billes, mode de mise en oeuvre par simple substitution de la partie mâle 1 m, représentée en figure 2a, par celle représentée en figure 4b ou 5b, en fonction de l'utilisation souhaitée de la broche à serrage rapide.

## Revendications

1. Broche à serrage rapide, comportant un corps de broche cylindrique muni d'au moins un organe de serrage à une de ses extrémités, une tige de commande de l'application et/ou du retrait de l'organe de serrage, contenue dans le corps de broche, et un organe de manoeuvre et de commande de cet organe de serrage placé à l'autre de ses extrémités sur un support de serrage d'une ou plusieurs pièces à serrer, **caractérisée en ce que** les pièces à assembler (P1, P2) étant placées entre le support de serrage (5) et l'organe de serrage, ladite broche comporte au moins un organe de commande simultanée de l'application et/ou du retrait de l'organe de serrage et du serrage/desserrage progressif des pièces planes entre l'organe de serrage en position d'application/retrait et ledit support de serrage, ledit organe de commande simultanée comportant au moins :
- un bouton de manoeuvre (30) par commande tourner-pousser placé sur une tige de poussée (2) de l'organe de serrage, l'ensemble bouton de manoeuvre-tige de poussée étant placé sur l'autre des extrémités du corps de broche et monté sur ce dernier par l'intermédiaire d'un ressort de rappel (21);
- un axe transversal (31), sensiblement orthogonal à l'axe longitudinal de symétrie de la tige de poussée (2) et engagé à glissement dans une lumière (22) ménagée sur la paroi du corps de broche, l'ensemble axe transversal-lumière formant une came à transmission axiale du déplacement en translation de la tige de poussée selon l'axe de rotation de celle-ci pour engendrer l'application/retrait de l'organe de serrage, ladite lumière ménagée sur la paroi du corps de broche étant formée par deux lumières élémentaires (22) symétriques par rapport à l'axe longitudinal de symétrie de la tige de poussée, chaque extrémité de l'axe transversal étant engagée à glissement dans l'une des lumières élémentaires, characterisée **en ce que** chaque lumière élémentaire formant une rampe de serrage.

2. Broche à serrage rapide selon la revendication 1, **caractérisée en ce que** les extrémités de l'axe transversal (31) sont engagées à glissement dans la lumière par l'intermédiaire d'un galet (31a, 31b).

3. Broche à serrage rapide selon la revendication 1, **caractérisée en ce que** chaque rampe de serrage élémentaire comprend :
- une rampe d'approche (220), dont l'axe de symétrie est sensiblement parallèle à l'axe de symétrie de la tige de poussée ;
- une rampe de serrage progressif (221), dont la ligne médiane est inclinée par rapport à l'axe de symétrie de la tige de poussée.

4. Broche à serrage rapide selon l'une des revendications 1 à 3, **caractérisée en ce que** l'organe de serrage est constitué par une vis à patin (10a, 10b) montée dans un alésage (2a) ménagé selon l'axe longitudinal de symétrie de la tige de commande.

5. Broche à serrage rapide selon l'une des revendications 1 à 3, **caractérisée en ce que** les pièces à assembler (P1, P2) étant munies chacune d'un orifice de serrage dans lequel le corps de broche est engagé, l'organe de serrage est constitué par un corps de broche cylindrique (1f, 1m) muni d'au moins une bille de serrage (10) à une de ses extrémités, et **en ce que** la tige de commande (2) de l'application et/ou du retrait de l'organe de serrage est constitué par une tige de commande de l'extraction et/ou du retrait radial de chaque bille de serrage, l'organe de commande simultanée de l'application et/ou du retrait de l'organe de serrage formant un organe de commande simultanée de l'extraction et/ou du retrait des billes de serrage et du serrage/desserrage progressif des pièces planes (P1, P2) entre les billes de serrage en position d'extraction/retrait et un épaulement de serrage.

6. Broche à serrage rapide selon la revendication 5, **caractérisée en ce que** la liaison mécanique entre l'extrémité de la tige de poussée exerçant l'extraction/retrait des billes de serrage comprend au moins une bille de transmission d'effort (20) contenue dans un logement ménagé à l'extrémité du corps de broche comportant les billes de serrage (10), ladite bille de transmission d'effort étant en contact mécanique, d'une part, avec l'extrémité de la tige de commande (2), et, d'autre part, avec les billes de serrage (10) engagées chacune dans un orifice d'extraction/retrait ménagé sur la paroi latérale d'extrémité du corps de broche.

7. Broche à serrage rapide selon l'une des revendications 5 ou 6, **caractérisée en ce que** le corps de broche comprend, au voisinage de l'épaulement de serrage :
- un filetage spécifique (12) ménagé sur la surface latérale du corps de broche ;
- un écrou (13) engagé sur le filetage spécifique formant un épaulement de serrage réglable en distance vis-à-vis de l'extrémité du corps de broche comportant les billes de serrage (10).

8. Broche à serrage rapide selon l'une des revendications 1 à 7, **caractérisée en ce que** le corps de broche est formé d'une partie femelle (1f) et d'une partie mâle (1m), complémentaires, la partie mâle (1m) amovible pouvant être substituée pour former soit une broche à vis à patin, soit une broche à billes.

## Patentansprüche

1. Schnellverschlussspindel, umfassend einen zylindrischen Spindelkörper, der an einem seiner Enden mit mindestens einem Klemmelement versehen ist, einen in dem Spindelkörper enthaltenen Betätigungsschaft zum Anlegen und/oder Zurückziehen des Klemmelements, ein Element zum Bedienen und Betätigen dieses Klemmelements, das an dem anderen Ende des Spindelkörpers an einem Klemmträger für eines oder mehrere festzuspannende Teile angeordnet ist, **dadurch gekennzeichnet, dass** die zusammenzufügenden Teile (P1, P2) zwischen dem Klemmträger (S) und dem Klemmelement platziert sind, dass die Spindel mindestens ein Element zum gleichzeitigen Betätigen des Anlegens und/oder Zurückziehens des Klemmelements und des allmählichen Festspannens/Lösens der ebenen Teile zwischen dem Klemmelement in der angelegten/zurückgezogenen Position und dem Klemmträger aufweist, wobei das Element für die gleichzeitige Bestätigung zumindest umfasst:
- einen als Dreh-Druckknopf (30) ausgebildeten Bedienkopf, der an einer Schubstange (2) des Klemmelements angeordnet ist, wobei die Gesamtheit aus Bedienknopf und Schubstange an dem anderen Ende des Spindelkörpers angeordnet und mittels einer Rückstellfeder (21) an letzterem befestigt ist,
- eine transversale Achse (31), die im Wesentlichen orthogonal zur Längssymmetrieachse der Schubstange (2) angeordnet und in eine in der Wand des Spindelkörpers gebildete Öffnung (22) gleitbeweglich eingesetzt ist, wobei die Gesamtheit aus transversaler Achse und Öffnung einen Axialnocken bildet für eine Übersetzung der Bewegung in eine Translation der Schubstange entlang der Drehachse derselben, um das Anlegen/Zurückziehen des Klemmelements herbeizuführen, wobei die in der Wand des Spindelkörpers gebildete Öffnung durch zwei Einzelöffnungen (22) gebildet ist, die bezüglich der Längssymmetrieachse der Schubstange symmetrisch sind, wobei jedes Ende der transversalen Achse gleitbeweglich in eine der Einzelöffnungen eingesetzt ist, **dadurch gekennzeichnet, dass** jede Einzelöffnung eine Klemmrampe bildet.

2. Schnellverschlussspindel nach Anspruch 1, **dadurch gekennzeichnet, dass** die Enden der transversalen Achse (31) mittels einer Rolle (31a, 31 b) gleitbeweglich in die Öffnung eingesetzt sind.

3. Schnellverschlussspindel nach Anspruch 1, **dadurch gekennzeichnet, dass** jede Einzelklemmrampe umfasst:
- eine Zustellrampe (220), deren Symmetrieachse im Wesentlichen parallel zur Symmetrieachse der Schubstange ist;
- eine Rampe (221) für ein schrittweises Festklemmen, deren Mittellinie bezüglich der Symmetrieachse der Schubstange geneigt ist.

4. Schnellverschlussspindel nach einem der Ansprüche 1 bis 3, dadurch gekennzeichet, dass das Klemmelement gebildet ist durch eine Halteschraube (10a, 10b), die in einer Bohrung (2a) montiert ist, die gemäß der Längssymmetrieachse des Betätigungsteils gebildet ist.

5. Schnellverschlussspindel nach einem der Ansprüche 1 bis 3, **dadurch gekennzeichnet, dass** die zusammenzufügenden Teile (P1, P2) jeweils mit einer Klemmöffnung versehen sind, in welche der Spindelkörper eingesetzt ist, wobei das Klemmelement gebildet ist durch einen zylindrischen Spindelkörper (1F, 1 m), der an einem seiner Enden mit mindestens einer Klemmkugel (10) versehen ist, und dass der Betätigungsschaft (2) zum Anlegen und/oder Zurückziehen des Klemmelements gebildet ist durch eine Betätigungsstange zum radialen Herausdrücken und/oder Zurückziehen jeder Klemmkugel, wobei das Element für das gleichzeitige Anlegen und/oder Zurückziehen des Klemmelements ein Betätigungselement bildet für das Herausdrücken und/oder Zurückziehen der Klemmkugeln und gleichzeitig für das allmähliche Festspannen/Lösen der ebenen Teile (P1, P2) zwischen den Klemmkugeln in der herausgedrückten/zurückgezogenen Position und einer Klemmschulter.

6. Schnellverschlussspindel nach Anspruch 5, **dadurch gekennzeichnet, dass** die mechanische Verbindung zwischen dem Ende der Schubstange zum Herausdrücken/Zurückziehen der Klemmkugeln zumindest eine Kraftübertragungskugel (20) umfasst, die in einer Aufnahme enthalten ist, die an einem die Klemmkugeln (10) aufweisenden Ende des Spindelkörpers gebildet ist, wobei sich die Kraftübertragungskugel einerseits mit dem Ende des Betätigungselements (2) und andererseits mit den Klemmkugeln (10), die jeweils in einer in der Seitenwand des Endes des Spindelkörpers gebildeten Öffnung zum Herausdrücken/Zurückbewegen angeordnet sind, mechanisch in Kontakt befindet.

7. Schnellverschlussspindel nach einem der Ansprüche 5 oder 6, **dadurch gekennzeichnet, dass** der Spindelkörper in der Nähe der Klemmschulter umfasst:
- ein spezielles Gewinde (12), das an der Seitenfläche des Spindelkörpers gebildet ist;
- eine Mutter (13), die auf das spezielle Gewinde geschraubt ist, wodurch eine Klemmschulter gebildet wird, deren Abstand gegenüber dem Ende des Spindelkörpers, das die Klemmkugeln aufweist, einstellbar ist.

8. Schnellverschlussspindel nach einem der Ansprüche 1 bis 7, **dadurch gekennzeichnet, dass** der Spindelkörper aus einem aufnehmenden Teil (1f) und einem komplementären eingereifenden Teil (1 m) gebildet ist, wobei der herausnehmbare eingreifende Teil (1m) ersetzt werden kann, um entweder eine Halteschraubenspindel oder eine Kugelspindel zu bilden.

## Claims

1. A rapid clamping pin, comprising a cylindrical pin body provided with at least one clamping member at one of its ends, a control rod for the application and/or withdrawal of the clamping member, contained in the pin body, and an operating and control member of this clamping member placed at the other of its ends on a clamping support of one or several pieces to be clamped, **characterised in that** the pieces to be assembled (P1, P2) are placed between the clamping support (5) and the clamping member, the said pin comprises at least one simultaneous control member of the application and/or withdrawal of the clamping member and of the progressive clamping/unclamping of the flat pieces between the clamping member in application/withdrawal position and the said clamping support, the said simultaneous control member comprising at least:
- an operating button (30) by turn/push control placed on a push rod (2) of the clamping member, the operating button/push rod assembly being placed on the other of the ends of the pin body and mounted on the latter by means of a return spring (21),
- a transverse axis (31), substantially orthogonal to the longitudinal symmetry axis of the push rod (2) and engaged in a sliding manner in an aperture (22) arranged on the wall of the pin body, the transverse axis/aperture assembly forming an axial transmission cam of the movement in translation of the push rod along the rotation axis thereof to bring about the application/withdrawal of the clamping member,
the said aperture arranged on the wall of the pin body being formed by two elementary apertures (22) symmetrical with respect to the longitudinal symmetry axis of the push rod, each end of the transverse axis being engaged in a sliding manner in one of the elementary apertures, **characterised in that** each elementary aperture forms a clamping ramp.

2. A rapid clamping pin according to claim 1, **characterised in that** the ends of the transverse axis (31) are engaged in a sliding manner in the aperture by means of a roller (31a, 31b),

3. A rapid clamping pin according to claim 1, **characterised in that** each elementary clamping ramp includes:
- an approach ramp (220), the symmetry axis of which is substantially parallel to the symmetry axis of the push rod;
- a progressive clamping ramp (221), the median line of which is inclined with respect to the symmetry axis of the push rod.

4. A rapid clamping pin according to any one of claims 1 to 3, **characterised in that** the clamping member is constituted by a grub screw with thrust pad (10a, 10b) mounted in a bore (2a) arranged along the longitudinal symmetry axis of the control rod.

5. A rapid clamping pin according to any one of claims 1 to 3, **characterised in that**, the pieces to be assembled (P1, P2) are each provided with a clamping orifice in which the pin body is engaged, the clamping member is constituted by a cylindrical pin body (1f,1m) provided with at least one clamping ball (10) at one of its ends, and **in that** the control rod (2) for the application and/or withdrawal of the clamping member is constituted by a control rod of the extraction and/or radial withdrawal of each clamping ball, the simultaneous control member of the application and/or withdrawal of the clamping member forming a simultaneous control member of the extraction and/or withdrawal of the clamping balls and of the progressive clamping/unclamping of the flat pieces (P1, P2) between the clamping balls in extraction/withdrawal position and a clamping shoulder.

6. A rapid clamping pin according to claim 5, **characterised in that** the mechanical connection between the end of the push rod exercising the extraction/withdrawal of the clamping bells includes at least one force transmission ball (20) contained in a housing arranged at the end of the pin body comprising the clamping balls (10), the said force transmission ball being in mechanical contact, on the one hand, with the end of the control rod (2), and, on the other hand, with the clamping balls (10) each engaged in an extraction/withdrawal orifice arranged on the lateral end wall of the pin body.

7. A rapid clamping pin according to claim 5 or claim 6, **characterised in that** the pin body includes, in the vicinity of the clamping shoulder:
- a specific threading (12) arranged on the lateral surface of the pin body;
- a nut (13) engaged on the specific threading forming a clamping shoulder adjustable with regard to distance with respect to the end of the pin body comprising the clamping balls (10).

8. A rapid clamping pin according to any one of claims 1 to 7, **characterised in that** the pin body is formed by a complementary female part (1f) and male part (1m), the removable male part (1m) being able to be substituted to form either a pin having a grub screw with thrust pad, or a ball pin.
